(19) Europäisches Patentamt
European Patent Office
Office européen des brevets

(11) **EP 4 297 386 A1**

(12) **EUROPEAN PATENT APPLICATION**
published in accordance with Art. 153(4) EPC

(43) Date of publication:
**27.12.2023 Bulletin 2023/52**

(21) Application number: **21930706.3**

(22) Date of filing: **16.03.2021**

(51) International Patent Classification (IPC):
**H04M 1/725** (2021.01)

(52) Cooperative Patent Classification (CPC):
**H04M 1/725**

(86) International application number:
**PCT/CN2021/080939**

(87) International publication number:
**WO 2022/193110 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
- **LIU, Liangliang
  Shenzhen, Guangdong 518129 (CN)**
- **YE, Jinzhou
  Shenzhen, Guangdong 518129 (CN)**
- **LI, Fei
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CALL PROCESSING METHOD, RELATED DEVICE, AND STORAGE MEDIUM**

(57)      A call processing method, a related device, and a storage medium are provided, to ensure security of user privacy information. The method includes: A first device receives an encrypted called identifier. The encrypted called identifier is generated by encrypting a called identifier, and the called identifier is an identifier of a called user. The first device obtains a called temporary identifier corresponding to the encrypted called identifier. The called temporary identifier is an identifier temporarily allocated to the called user. The first device sends the called temporary identifier to a second device. The second device is configured to call, based on the called temporary identifier, a called device used by the called user.

FIG. 2

**Description**

**TECHNICAL FIELD**

This application relates to the field of communication technologies, and in particular, to a call processing method, a related device, and a storage medium.

**BACKGROUND**

With popularization of internet of things devices and continuous development of communication requirements in various industries, operators' voice and video communication network is required to provide full-process network-wide, real-time reachable, stable and reliable, and low-cost video and video services for various industries.

In an implementation process in which a calling user calls a called user, the calling user needs to send a calling number of the calling user and a called number of the called user to the voice and video communication network. However, in a process in which the calling user calls the called user over the voice and video communication network, the calling number and the called number are prone to be leaked, causing leakage of user privacy information.

**SUMMARY**

Embodiments of the present invention provide a call processing method, a related device, and a storage medium, to avoid leakage of user privacy information in a process in which a calling user calls a called user.

According to a first aspect, an embodiment of the present invention provides a call processing method, including: A first device receives an encrypted called identifier. The encrypted called identifier is generated by encrypting a called identifier, and the called identifier is an identifier of a called user. The first device obtains a called temporary identifier corresponding to the encrypted called identifier. The called temporary identifier is an identifier temporarily allocated to the called user. The first device sends the called temporary identifier to a second device. The second device is configured to call, based on the called temporary identifier, a called device used by the called user.

It can be learned that, in a process in which a calling user calls the called user, the first device receives the encrypted called identifier. In this way, a possibility of leakage of the called identifier is avoided. In addition, in the process in which the calling user calls the called user, each device does not need to decrypt the encrypted called identifier. In this way, a risk, caused by decrypting the encrypted called identifier by each device, of the leakage of the called identifier related to privacy information of the called user is avoided, and security of the called identifier in a call process is improved. Further, in the call process, as each device does not need to decrypt the encrypted called identifier, call efficiency is improved.

With reference to the first aspect, in an optional implementation, before the first device obtains the called temporary identifier corresponding to the encrypted called identifier, the method further includes: The first device obtains the called temporary identifier corresponding to the called identifier. The first device establishes a correspondence between the encrypted called identifier and the called temporary identifier.

The called temporary identifier does not relate to the privacy information of the called user. For example, information about the temporary identifier is a series of random characters corresponding to the called user. It can be learned that, if leakage of the called temporary identifier occurs, leakage of the privacy information of the called user can be effectively avoided because the called temporary identifier does not relate to the privacy information of the called user.

When the first device establishes the correspondence between the encrypted called identifier and the called temporary identifier, in the process in which the calling user calls the called user, after receiving the encrypted called identifier, the first device may obtain the corresponding called temporary identifier without decrypting the encrypted called identifier. A call to the called user may be implemented based on the called temporary identifier.

Based on the first aspect, in an optional implementation, before the first device obtains the called temporary identifier corresponding to the called identifier, the method further includes: The first device receives the encrypted called identifier from a calling device. The encrypted called identifier is generated by encrypting the called identifier by using a first key, and the calling device is a device used by a calling user. The first device decrypts the encrypted called identifier by using the first key to obtain the called identifier.

Based on the first aspect, in an optional implementation, before the first device decrypts the encrypted called identifier by using the first key to obtain the called identifier, the method further includes: The first device calculates a private key and a temporary public key from the calling device by using an elliptic curve cryptography ECC algorithm, to obtain the first key.

The first device may obtain the called identifier by decrypting the encrypted called identifier by using the first key, to establish the correspondence between the encrypted called identifier and the called temporary identifier. In this way, the security of the called identifier transmitted by the calling device to the first device is improved.

Based on the first aspect, in an optional implementation, before the first device sends the called temporary identifier to the second device, the method further includes: The first device receives a first encrypted calling identifier from the calling device. The first encrypted calling identifier is generated by encrypting a calling identifier by using the first key, and the calling identifier is an identifier of the calling user. The first device decrypts the first encrypted calling identifier by using the first key to obtain the calling identifier. The first device establishes a correspondence between the encrypted called identifier and the calling identifier.

Based on the first aspect, in an optional implementation, after the first device sends the called temporary identifier to the second device, the method further includes: The first device receives an identifier query request from the called device. The identifier query request includes an encrypted calling identifier. The first device obtains the calling identifier corresponding to the encrypted calling identifier. The first device sends the calling identifier to the called device.

It can be learned that, when establishing the correspondence between the encrypted called identifier and the calling identifier, in a process of calling the called user, the first device can send the calling identifier to the called device based on the identifier query request, and the called device may display the calling identifier in a ringing process.

Based on the first aspect, in an optional implementation, before the first device obtains the called temporary identifier corresponding to the called identifier, the method further includes: The first device encrypts the called identifier by using a second key to generate the encrypted called identifier. The first device sends the encrypted called identifier to a calling device.

Based on the first aspect, in an optional implementation, before the first device sends the called temporary identifier to the second device, the method further includes: The first device receives a first encrypted calling identifier from the calling device. The first encrypted calling identifier is generated by encrypting a calling identifier by using a first key, and the calling identifier is an identifier of a calling user. The first device decrypts the first encrypted calling identifier by using the first key to obtain the calling identifier. The first device encrypts the calling identifier by using the second key to generate a second encrypted calling identifier. The first device sends the second encrypted calling identifier to the called device.

It can be learned that, the called device may obtain the calling identifier without sending the identifier query request to the first device separately. In this way, the call efficiency is improved. In addition, the calling identifier sent by the first device to the called device is encrypted. In this way, security of the calling identifier is improved.

Based on the first aspect, in an optional implementation, before the first device receives the encrypted called identifier, the method further includes: The first device receives a first temporary identifier application from the called device. The first temporary identifier application includes an identifier of a subscriber identity module card of the called device. The first device allocates the called temporary identifier to the called user based on the first temporary identifier application. The first device establishes a correspondence between the called identifier and the called temporary identifier. The first device sends the called temporary identifier and the encrypted called identifier to the called device.

It can be learned that, when the called device includes the subscriber identity module card, the called device may send the first temporary identifier application including the identifier of the subscriber identity module card to the first device, and the first device allocates the called temporary identifier to the called device based on the first temporary identifier application. The called temporary identifier does not relate to the privacy information of the called user. In this way, security of the privacy information of the called user is ensured.

Based on the first aspect, in an optional implementation, before the first device receives the encrypted called identifier, the method further includes: The first device receives a second temporary identifier application from the called device. The second temporary identifier application includes the called identifier. The first device allocates the called temporary identifier to the called user based on the second temporary identifier application. The first device establishes a correspondence between the called identifier and the called temporary identifier. The first device sends the called temporary identifier to the called device.

It can be learned that, when no subscriber identity module card is installed on the called device, the called device sends the second temporary identifier application including the identifier of the called user to the first device, and the first device can allocate the called temporary identifier to the called device based on the second temporary identifier application from the called device. The called temporary identifier does not relate to the privacy information of the called user. In this way, security of the privacy information of the called user is ensured.

Based on the first aspect, in an optional implementation, after the first device sends the called temporary identifier to the called device, the method further includes: The first device receives a registration request from the called device. The registration request includes the called temporary identifier. The first device sends a random number to the called device. The first device encrypts the random number by using a third key to generate a first parameter. The first device receives a second parameter from the called device. The second parameter is a parameter generated by the called device by encrypting the random number by using the third key. If the first device determines that the first parameter is equal to the second parameter, the first device sends a registration response message to the called device. The registration response message indicates that the called device registers successfully.

It can be learned that, in a process in which the called user registers with the first device, the called user does not need to send, to the first device, a registration request including the privacy information of the called user. The registration request in this aspect includes the temporary called identifier that does not relate to the privacy information of the called user. In this way, in the process in which the called user registers with the first device, the security of the privacy information of the called user is effectively ensured.

According to a second aspect, an embodiment of the present invention provides a call processing method, including: A calling device obtains a called identifier corresponding to a to-be-called called user. The calling device encrypts the called identifier to obtain an encrypted called identifier. The calling device sends a call request message to a second device. The call request message includes the encrypted called identifier.

For descriptions of advantageous effects described in this aspect, refer to the descriptions shown in the first aspect. Details are not described in this aspect.

Based on the second aspect, in an optional implementation, that the calling device encrypts the called identifier to obtain an encrypted called identifier includes: The calling device encrypts the called identifier by using a first key to obtain the encrypted called identifier.

Based on the second aspect, in an optional implementation, before the calling device sends the call request message to the second device, the method further includes: The calling device encrypts a calling identifier by using a first key to obtain an encrypted calling identifier. The calling identifier is an identifier of a calling user, and the call request message includes the encrypted calling identifier.

Based on the second aspect, in an optional implementation, the method further includes: The calling device calculates a temporary private key and a public key from a first device by using an elliptic curve cryptography ECC algorithm, to obtain the first key.

According to a third aspect, an embodiment of the present invention provides a call processing method, including: A second device receives a called temporary identifier from a first device. The called temporary identifier is an identifier temporarily allocated to a called user. The second device sends a call request message to a called device. The call request message includes the called temporary identifier, and the called device is a device used by the called user.

It can be learned that, in a process in which a calling user calls the called user, the second device calls the called user based on the called temporary identifier. The called temporary identifier does not relate to privacy information of the called user. In this way, leakage of the privacy information of the called user is effectively avoided. In addition, the second device directly calls the called user based on the called temporary identifier without decryption. In this way, efficiency of calling the called user is improved. Because the second device does not obtain a called identifier related to the privacy information of the called user, the leakage of the privacy information of the called user on the second device is effectively avoided, and security of the privacy information of the called user is improved.

Based on the third aspect, in an optional implementation, before the second device receives the called temporary identifier from the first device, the method further includes: The second device receives a call request message from a calling device. The call request message includes an encrypted called identifier, the encrypted called identifier is generated by encrypting a called identifier, and the called identifier is an identifier of the called user. The second device sends a query request to the first device. The query request includes the encrypted called identifier, and is used to request to obtain a called temporary identifier corresponding to the encrypted called identifier.

Based on the third aspect, in an optional implementation, that the second device sends a call request message to a called device includes: The second device sends the call request message to the called device based on a registration address of a called device corresponding to the called temporary identifier.

According to a fourth aspect, an embodiment of the present invention provides a first device, including a memory and a transceiver both coupled to a processor. The memory stores computer program code, and the processor invokes and executes the computer program code in the memory, to enable the processor to perform a processing-related step according to any one of the first aspect, and the transceiver is configured to perform a receiving/sending-related step according to any one of the first aspect.

According to a fifth aspect, an embodiment of the present invention provides a calling device, including a memory and a transceiver both coupled to a processor. The memory stores computer program code, and the processor invokes and executes the computer program code in the memory, to enable the processor to perform a processing-related step according to any one of the second aspect, and the transceiver is configured to perform a receiving/sending-related step according to any one of the second aspect.

According to a sixth aspect, an embodiment of the present invention provides a second device, including a memory and a transceiver both coupled to a processor. The memory stores computer program code, and the processor invokes and executes the computer program code in the memory, to enable the processor to perform a processing-related step according to any one of the third aspect, and the transceiver is configured to perform a receiving/sending-related step according to any one of the third aspect.

According to a seventh aspect, an embodiment of the present invention provides a communication system, including a calling device, a first device, a second device, and a called device. The calling device is configured to call the called device via the first device and the second device. The calling device is shown in the fifth aspect, the first device is shown in the fourth aspect, and the second device is shown in the sixth aspect.

According to an eighth aspect, an embodiment of the present invention provides a computer-readable storage medium. The computer-readable storage medium stores a computer program, and when the computer program is executed by a processor, the method according to any one of the first aspect to the third aspect can be completed.

## BRIEF DESCRIPTION OF DRAWINGS

FIG. 1 is a structural example diagram of an embodiment of a communication system according to this application;
FIG. 2 is a flowchart of steps of Embodiment 1 of a call processing method according to this application;
FIG. 3 is a flowchart of steps of Embodiment 2 of a call processing method according to this application;
FIG. 4 is a flowchart of steps of Embodiment 3 of a call processing method according to this application;
FIG. 5 is a flowchart of steps of Embodiment 4 of a call processing method according to this application;
FIG. 6 is a structural example diagram of an embodiment of a network device according to this application; and
FIG. 7 is another structural example diagram of an embodiment of a network device according to this application.

## DESCRIPTION OF EMBODIMENTS

The following clearly and completely describes the technical solutions in embodiments of the present invention with reference to the accompanying drawings in embodiments of the present invention. It is clear that the described embodiments are merely a part rather than all of embodiments of the present invention. All other embodiments obtained by persons skilled in the art based on embodiments of the present invention without creative efforts shall fall within the protection scope of the present invention.

The term "and/or" in this application may be an association relationship for describing associated objects and represents that three relationships may exist. For example, A and/or B may represent the following three cases: Only A exists, both A and B exist, and only B exists.

In the specification, claims, and accompanying drawings of this application, the terms "first", "second", and the like are intended to distinguish between similar objects but do not necessarily describe a specific order or sequence. It can be understood that, terms used in such a way are interchangeable in proper circumstances, so that embodiments described herein can be implemented in other orders than the order illustrated or described herein.

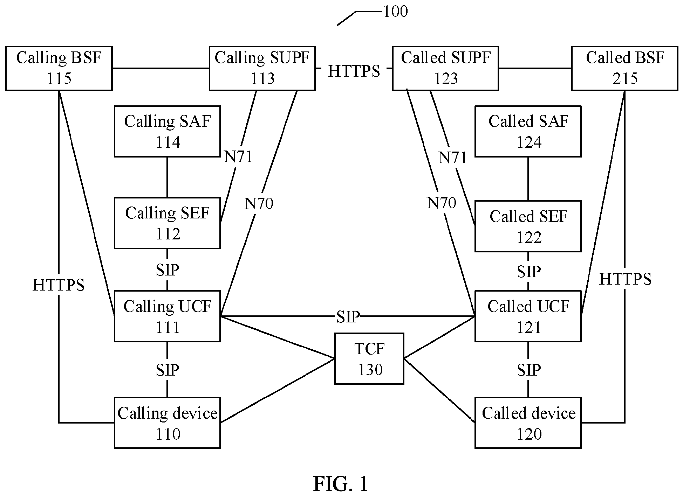

This application provides a call processing method. To better understand the call processing method provided in this application, the following first describes, with reference to FIG. 1, a structure of a communication system to which the method described in this application is applied. It can be noted that, a specific network architecture of the communication system is not limited in this application, provided that a calling user can call a called user over the communication system, and security of privacy information of the calling user and privacy information of the called user can be effectively ensured in a call process.

The following describes the architecture of the communication system 100 shown in the embodiments.

The communication system 100 shown in the embodiments includes a calling device used by a calling user. The calling device shown in the embodiments may be any device that can call a called user, such as a smart terminal, a computer, or the like.

A calling device 110 shown in embodiments can call, over the communication system 100, a called device 120 used by the called user. For descriptions of the called device 120, refer to the descriptions of the calling device 110. Details are not described again.

The calling device 110 and the called device 120 both are connected to a transport control function (transport control function, TCF) 130. A calling unified control function (unified control function, UCF) 111 is separately connected to the calling device 110, the TCF 130, a called UCF 121, a calling service enabler function (service enabler function, SEF) 112, and a calling service user profile function (service user profile function, SUPF) 113. The called UCF 121 is separately connected to the called device 120, the TCF 130, the calling UCF 111, a called SEF 122, and a called SUPF 123.

The calling SEF 112 is separately connected to the calling UCF 111, a calling service and application function (service and application function, SAF) 114, and the calling SUPF 113. The called SEF 122 is separately connected to the called UCF 121, a called SAF 124, and the called SUPF 123. The calling SUPF 113 is further connected to the called SUPF 123.

A bootstrapping server function (bootstrapping server function, BSF) 115 is separately connected to the calling SUPF 113, the calling UCF 111, and the calling device 110. A called BSF 215 is separately connected to the called SUPF 123, the called UCF 121, and the called device 120.

Specifically, the calling SUPF 113 and the called SUPF 123 may interact with each other through the hypertext transfer protocol over secure socket layer (hypertext transfer protocol over secure socket layer, HTTPS). The session initiation protocol (session initiation protocol, SIP) may be used for interaction between the calling SEF 112 and the calling UCF 111, interaction between the calling UCF 111 and the calling device 110, interaction between the calling UCF 111 and the called UCF 121, interaction between the called SEF 122 and the called UCF 121, and interaction between the called UCF 121 and the called device 120. An N71 interface may be used for interaction between the calling SEF 112 and the calling SUPF 113, and interaction between the called SUPF 123 and the called SEF. An N70 interface may be used for interaction between the calling UCF 111 and the calling SUPF 113, and interaction between the called SUPF 123 and the called UCF 121. HTTPS may be used for interaction between the calling BSF 115 and the calling device 110, and interaction between the called BSF 215 and the called device 120.

Functions that the calling UCF 111 is configured to perform may include: handling a process in which the calling user registers with the communication system via the calling device 110, and performing identity authentication and authorization on the calling user; interacting with the calling SUPF 113 to store, update, delete, and query for a profile of the calling user, where the profile of the calling user may be used for registration and identity authentication and authorization processes; processing a signaling message from the calling device 110, and determining a corresponding signaling route based on a different policy; triggering a corresponding service based on a user profile obtained from the calling SUPF 113; controlling traffic optimization on a media plane through interaction with the TCF 130; and interacting with the calling SEF 112 to ensure provision of a service and an application. For descriptions of a function of the called UCF 121, refer to the descriptions of the functions of the calling UCF 111. Details are not described again.

With introduction of a service-based technology, the calling SEF 112 implements service-related support functions, and may implement functions such as registration, authentication, authorization, and the like of the calling user at an application layer, and is responsible for service and application management. For descriptions of functions of the called SEF 122, refer to the descriptions of the functions of the calling SEF 112. Details are not described again.

The calling SUPF 113 is configured to provide functions of maintaining and managing an archive of the calling user, and the functions mainly include storing, updating, deleting, and querying for related data of the calling user based on requirements of the calling UCF 111. For example, a correspondence between an identifier (ID) of the calling user and the profile of the calling user is established. In this way, the calling SUPF 113 may query for the profile of the calling user based on the ID of the calling user. The profile of the calling user may be provided by an operator or the calling user.

To better understand the communication system shown in FIG. 1, the following describes an example of a call process in an existing solution.

To call a called user, a calling user sends a call request message to a calling UCF via a calling device. The call request message includes a calling identifier (for example, a real number of the calling user) and a called identifier (for example, a real number of the called user). The calling UCF sends an addressing request to a calling SUPF. The addressing request is used to request to obtain an address of a called UCF to which a called device belongs. The calling SUPF returns the address of the called UCF to the calling UCF. The calling UCF may send the call request message to the called UCF based on the address of the called UCF, and the called UCF forwards the call request message to the called device, to implement a call to the called device.

It can be learned that, in the call process in the existing solution, the call request message includes the calling identifier related to privacy information of the calling user and the called identifier related to privacy information of the called user, and the calling identifier and the called identifier included in the call request message are sent in plaintext. A great security risk exists in a transmission process of the call request message. The calling identifier and the called identifier included in the call request message are prone to be maliciously snooped, causing leakage of the private information of the calling user and the called user.

To ensure security of communication between the calling user and the called user, in the existing solution, a secure connection may be further established between devices based on a digital certificate. For example, a transport layer security (transport layer security, TLS) protocol secure connection is established between the devices. Although the secure connection ensures transmission security of the call request message transmitted between the devices, a process of establishing the secure connection is complex. Consequently, efficiency of calling the called user by the calling user is greatly delayed.

In view of defects of the call process in the existing solution, in the call processing method provided in this application, leakage of the calling identifier and the called identifier that are related to the privacy information can be effectively avoided, establishment of a complex secure connection between different devices can be further avoided, and the efficiency of calling the called user by the calling user can be improved.

To better understand the call processing method provided in this application, the call processing method described in this application is first briefly described.

The call processing method described in this application is related to two phases. Phase 1: A process of allocating a calling temporary identifier of the calling user and a called temporary identifier of the called user. The calling user performs registration based on the calling temporary identifier, and the called user performs registration based on the called temporary identifier. The calling temporary identifier is not related to the privacy information of the calling user, and the called temporary identifier is not related to the privacy information of the called user. Phase 2: A process in which the calling user calls the called user by using the calling temporary identifier and the called temporary identifier.

A specific execution process of the call processing method provided in this application is described by using examples in the following embodiments.

**Embodiment 1**

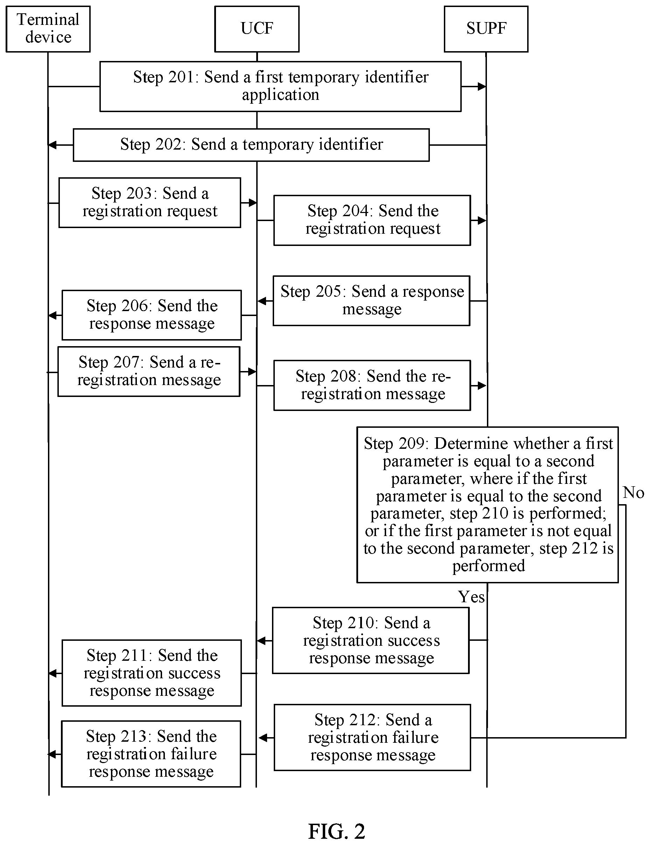

The following first describes the foregoing Phase 1 with reference to Embodiment 1 shown in FIG. 2. According to Embodiment 1 shown in FIG. 2, different users can obtain different temporary identifiers, and perform registration based on the temporary identifiers. The following describes a specific process.

Step 201: A terminal device sends a first temporary identifier application to an SUPF.

The terminal device in this embodiment may be the calling device or the called device shown in FIG. 1. This is not specifically limited in this embodiment. In other words, a calling user can obtain a calling temporary identifier by using the method described in this embodiment, and a called user can obtain a called temporary identifier by using the method described in this embodiment.

The SUPF described in this embodiment is an SUPF to which the terminal device belongs. For example, if the terminal device is the calling device, the SUPF is a calling SUPF. If the terminal device is the called device, the SUPF is a called SUPF.

This embodiment is described by using an example in which a device configured to allocate the temporary identifier to the terminal device is the SUPF. In another example, the SUPF and a BSF may jointly allocate the temporary identifier to the terminal device. Alternatively, in another example, a function of the SUPF described in this embodiment may be performed by any other device. The SUPF described in this embodiment may also be referred to as a first device, and a specific name is not limited.

In this embodiment, an example in which the terminal device does not store an identifier of a user of the terminal device in an initial phase is used for description.

For example, a subscriber identity module card is already installed on the terminal device described in this embodiment. The terminal device on which the subscriber identity module card is already installed, does not store the identifier of the user of the terminal device in the initial phase.

The subscriber identity module card may be a subscriber identity module (subscriber identity module, SIM), a universal subscriber identity module (universal subscriber identity module, USIM) card, an embedded subscriber identity module (embedded-SIM, eSIM), or the like. This is not specifically limited in this embodiment.

When the terminal device includes the subscriber identity module card, the terminal device may send the first temporary identifier application including an identifier of the subscriber identity module card to the SUPF.

A specific type of the identifier of the subscriber identity module card is not limited in this embodiment, provided that the identifier of the subscriber identity module card can uniquely identify a user. Specifically, if the terminal device is the called device, the identifier of the subscriber identity module card can uniquely identify the called user. If the terminal device is the calling device, the identifier of the subscriber identity module card can uniquely identify the calling user.

For example, the identifier of the subscriber identity module card may be an international mobile subscriber identity (international mobile subscriber identity, IMSI), a temporary mobile subscriber identity (temporary mobile subscriber identity, TMSI), or a subscription permanent identifier (subscription permanent identifier, SUPI).

Step 202: The SUPF sends the temporary identifier to the terminal device.

In this embodiment, the SUPF can allocate the temporary identifier to the user based on the first temporary identifier application.

Specific content of the temporary identifier is not limited in this embodiment, provided that the temporary identifier does is not related to privacy information of the user. The privacy information may be a name of the user, and/or a user identifier, and the like. In this way, leakage of the temporary identifier does not cause leakage of the privacy information of the user.

For example, the SUPF receives a first temporary identifier application from a user "lisi", and the first temporary identifier application includes an identifier of a subscriber identity module card. The SUPF determines that the user is "lisi". Specifically, in a process in which the user registers with an operator, the SUPF may store a correspondence between the user, the user identifier, and the identifier of the subscriber identity module card allocated to the user.

The user identifier described in this embodiment may be a real number of the user or an email address of the user. In this embodiment, an example in which the user identifier is the email address of the user is used for description. In the foregoing example, for the user "lisi", a user identifier is "lisi@bj.cmcc.com".

A specific manner of allocating the temporary identifier by the SUPF is not limited in this embodiment. For example, the SUPF may randomly allocate a series of characters to the user. For example, a temporary identifier allocated by the SUPF to the user having the user identifier "lisi@bj.cmcc.com" is "CSqGSIb3DQEBAQUAA4GNADCBiQKBgQCjfidregls@bj.cmcc.com".

It can be learned that, leakage of the temporary identifier does not cause the leakage of the privacy information of the user (for example, the user identifier or the identifier of the subscriber identity module card). In this way, security of the privacy information of the user is effectively ensured.

The SUPF further needs to establish a correspondence between the user identifier and the temporary identifier, and needs to ensure that the SUPF allocates different temporary identifiers to different users, to ensure that there is a unique correspondence between the user and the allocated temporary identifier.

For the correspondence established by the SUPF described in this embodiment, refer to Table 1 shown below:

**Table 1**

| User identifier | Temporary identifier |
|---|---|
| lisi@bj.cmcc.com | CSqGSIb3DQEBAQUAA4GNADCBiQKBgQCjfidregls@bj.cmcc.com |
| zhangsan@gd.ct.co m | f6T5ALJdUSIfzTH1eclzft5BmaxujRLyPsQrsMBfidregzs@gd.ct.com |

As shown in Table 1, the SUPF can allocate the temporary identifier "CSqGSIb3DQEBAQUAA4GNADCBiQKBgQCjfidregls@bj.cmcc.com" to the user having the user identifier "lisi@bj.cmcc.com". The SUPF can further allocate the temporary identifier "f6T5ALJdUSIfzTH1eclzft5BmaxujRLyPsQrsMBfidregzs@gd.ct.com" to a user having the user identifier "zhangsan@gd.ct.com". It can be learned that, the temporary identifier allocated by the SUPF to the user "lisi" and the temporary identifier allocated by the SUPF to the user "zhangsan" are different, and neither of the temporary identifiers are related to privacy information of the user "lisi" and the user "zhangsan".

Step 203: The terminal device sends a registration request to a UCF.

The UCF described in this embodiment is a UCF to which the terminal device belongs. As shown in FIG. 1, if the terminal device is the called device, the UCF is a called UCF. If the terminal device is the calling device, the UCF is a calling UCF. The terminal device can receive a call request message from the UCF to which the terminal device belongs, to implement a call connection.

A function performed by the UCF in this embodiment may also be performed by any other device. This is not specifically limited in this embodiment. The UCF described in this embodiment may also be referred to as a second device, and a specific name is not limited.

When receiving the temporary identifier from the SUPF, the terminal device sends the registration request to the UCF. The registration request includes the temporary identifier and a registration address of the terminal device.

The UCF establishes a registration address query list. The registration address query list stores a correspondence between the temporary identifier and the registration address, to facilitate use of the correspondence in a subsequent call process. For example, a registration address query list stored by the UCF for the temporary identifier "CSqGSIb3DQEBAQUAA4GNADCBiQKBgQCjfidregls@bj.cmcc.com" of the user "lisi" and the temporary identifier "f6T5ALJdUSIfzTH1eclzft5BmaxujRLyPsQrsMBfidregzs@gd.ct.com" of the user "zhangsan" is shown in Table 2:

**Table 2**

| Temporary identifier | Registration address |
|---|---|
| CSqGSIb3DQEBAQUAA4GNADCBiQKBgQCjfidregls@bj.cmcc.com | IP address 1 |
| f6T5ALJdUSIfzTH1eclzft5BmaxujRLyPsQrsMBfidregzs@gd.ct.com | IP address 2 |

In this embodiment, an example in which a registration address that is used for a call and that corresponds to the temporary identifier is an internet protocol (internet protocol, IP) address is used. For example, the IP address 1 is a registration address of the user "lisi". If the user "lisi" needs to be called, the UCF sends the call request message to the IP address 1. For another example, the IP address 2 is a registration address of the user "zhangsan". If the user "zhangsan" needs to be called, the UCF sends the call request message to the IP address 2.

It can be noted that, in this embodiment, an example in which the registration address is the IP address is used for description. In another example, the registration address may alternatively be a domain name address or any other type of address.

Step 204: The UCF sends the registration request to the SUPF.

Step 205: The SUPF sends a response message to the UCF.

When receiving the registration request, the SUPF may obtain the temporary identifier included in the registration request. The SUPF obtains, based on the correspondence shown in Table 1, the user identifier corresponding to the temporary identifier.

For example, if the temporary identifier included in the registration request is "CSqGSIb3DQEBAQUAA4GNADCBiQKBgQCjfidregls@bj.cmcc.com", the SUPF may query for the corresponding user identifier "lisi@bj.cmcc.com" based on Table 1.

The SUPF generates a random number, and the SUPF encrypts the random number by using a third key to generate a first parameter.

The third key described in this embodiment is a symmetric-key encryption (symmetric-key encryption) key. A specific symmetric-key encryption algorithm is not limited in this embodiment. For example, the symmetric-key encryption algorithm may be a data encryption standard (data encryption standard, DES) algorithm, a triple data encryption standard (3DES) algorithm, an international data encryption algorithm (international data encryption algorithm, IDEA), or the like.

The SUPF in this embodiment sends the response message including the random number to the UCF.

Step 206: The UCF sends the response message to the terminal device.

Specifically, the UCF sends the response message including the random number to the terminal device.

Step 207: The terminal device sends a re-registration message to the UCF.

When obtaining the random number included in the response message, the terminal device may encrypt the random number based on a third key stored in the terminal device, to generate a second parameter.

The third key stored in the terminal device in this embodiment is the same as a third key stored in the SUPF. The SUPF and the terminal device perform corresponding encryption and decryption operations on the random number based on the same third key.

The terminal device sends the re-registration message including the second parameter to the UCF.

Step 208: The UCF sends the re-registration message to the SUPF.

Step 209: The SUPF determines whether the first parameter is equal to the second parameter. If the first parameter is equal to the second parameter, step 210 is performed. If the first parameter is not equal to the second parameter, step 212 is performed.

When obtaining the second parameter included in the re-registration message, the SUPF determines whether the first parameter is equal to the second parameter.

If the SUPF determines that the first parameter is equal to the second parameter, it is determined that the terminal device successfully registers with the SUPF, and step 210 is performed.

If the SUPF determines that the first parameter is not equal to the second parameter, it is determined that registration of the terminal device fails, and step 212 is performed.

Step 210: The SUPF sends a registration success response message to the UCF.

When determining that the terminal device successfully registers with the SUPF, the SUPF may send the registration success response message to the UCF. The registration success response message indicates that the terminal device successfully registers with the SUPF.

In this embodiment, for example, as shown in step 201, it can be learned that the subscriber identity module card is already installed on the terminal device. The terminal device does not store the user identifier of the terminal device in an initial state. The registration success response message sent by the SUPF includes an encrypted user identifier, to ensure that the terminal device can obtain the user identifier.

A manner in which the SUPF encrypts the user identifier is not limited in this embodiment. For example, the SUPF encrypts the user identifier by using the third key. The terminal device decrypts the encrypted user identifier by using the third key, to obtain the user identifier.

Step 211: The UCF sends the registration success response message to the terminal device.

Step 212: The SUPF sends a registration failure response message to the UCF.

When determining that the registration of the terminal device fails, the SUPF may send the registration failure response message to the UCF. The registration failure response message indicates that the registration of the terminal device fails.

Step 213: The UCF sends the registration failure response message to the terminal device.

After determining, based on the registration failure response message, that the registration fails, the terminal device may re-register with the SUPF. For a re-registration process, refer to the foregoing steps. Details are not described again.

According to the method described in this embodiment, when the subscriber identity module card is already installed on the terminal device, the terminal device sends the first temporary identifier application including the identifier of the subscriber identity module card to the SUPF. The SUPF can allocate the temporary identifier to the terminal device based on the first temporary identifier application from the terminal device. The temporary identifier is not related to privacy information of any user. The terminal device registers with the SUPF by using the temporary identifier, to facilitate a subsequent call. It can be learned that, in a process in which the terminal device performs registration by using the temporary identifier, because there is no need to send a real user identifier, such as a real number, an email address, and the like related to privacy information, to the SUPF, security of user privacy information in a registration phase is effectively ensured.

**Embodiment 2**

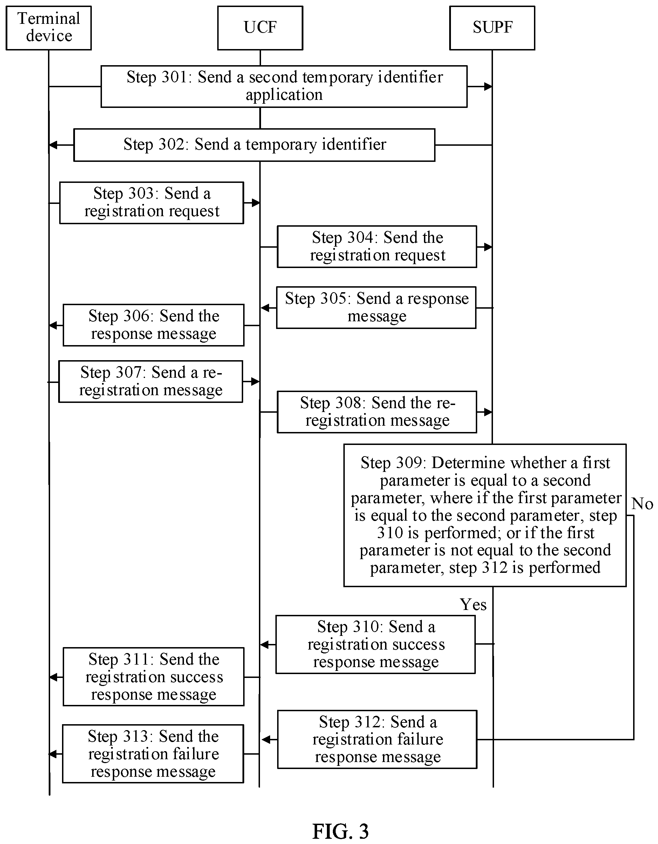

Embodiment 1 describes the process in which the terminal device obtains the temporary identifier and registers with the SUPF when the subscriber identity module card is already installed on the terminal device. This embodiment describes a process in which the terminal device obtains the temporary identifier and registers with the SUPF when no subscriber identity module card is installed on the terminal device. The following describes an execution process with reference to FIG. 3.

Step 301: A terminal device sends a second temporary identifier application to an SUPF.

For specific descriptions of the terminal device and the SUPF in this embodiment, refer to Embodiment 1. Details are not described again.

Because no subscriber identity module card is installed on the terminal device described in this embodiment, the terminal device already stores a user identifier in an initial state. In this way, the terminal device may send the second temporary identifier application including the user identifier to the SUPF.

It can be learned that, the first temporary identifier application shown in Embodiment 1 and the second temporary identifier application shown in Embodiment 2 have a same function. To be specific, the first temporary identifier application and the second temporary identifier application both request the SUPF to allocate a temporary identifier to a user. A difference lies in that a message included in the first temporary identifier application and a message included in the second temporary identifier application are different. The first temporary identifier application includes an identifier of the subscriber identity module card, and the second temporary identifier application includes the user identifier.

Step 302: The SUPF sends the temporary identifier to the terminal device.

The SUPF described in this embodiment can directly obtain the user identifier based on the second temporary identifier application, and then allocate the temporary identifier based on the identifier. For descriptions of a specific process, refer to the process of allocating the temporary identifier based on the user identifier in step 202 of Embodiment 1. Details are not described in this embodiment.

Step 303: The terminal device sends a registration request to a UCF.

Step 304: The UCF sends the registration request to the SUPF.

Step 305: The SUPF sends a response message to the UCF.

Step 306: The UCF sends the response message to the terminal device.

Step 307: The terminal device sends a re-registration message to the UCF.

Step 308: The UCF sends the re-registration message to the SUPF.

Step 309: The SUPF determines whether a first parameter is equal to a second parameter. If the first parameter is equal to the second parameter, step 310 is performed. If the first parameter is not equal to the second parameter, step 312 is performed.

For descriptions of an execution process of step 303 to step 309 described in this embodiment, refer to step 203 to step 209 shown in FIG. 2. Details are not described again.

Step 310: The SUPF sends a registration success response message to the UCF.

In this embodiment, because no subscriber identity module card is installed on the terminal device, the terminal device already stores the user identifier in the initial state. It can be learned that a difference between this embodiment and Embodiment 1 lies in that the registration success response message described in this embodiment does not need to carry the user identifier. The registration success response message described in this embodiment merely indicates the terminal device that the terminal device successfully registers with the SUPF.

Step 311: The UCF sends the registration success response message to the terminal device.

Step 312: The SUPF sends a registration failure response message to the UCF.

Step 313: The UCF sends the registration failure response message to the terminal device.

For descriptions of an execution process of step 311 to step 313 described in this embodiment, refer to step 211 to step 213 shown in FIG. 2. Details are not described again.

According to the method described in this embodiment, when no subscriber identity module card is installed on the terminal device, the terminal device sends the second temporary identifier application including the user identifier to the SUPF. The SUPF can allocate the temporary identifier to the terminal device based on the second temporary identifier application from the terminal device. The temporary identifier is not related to privacy information of any user. The terminal device registers with the SUPF by using the temporary identifier, to facilitate a subsequent call. It can be learned that, in a process in which the terminal device performs registration by using the temporary identifier, because there is no need to send a real user identifier, such as a real number, an email address, and the like related to privacy information, to the SUPF, security of user privacy information in a registration phase is effectively ensured.

**Embodiment 3**

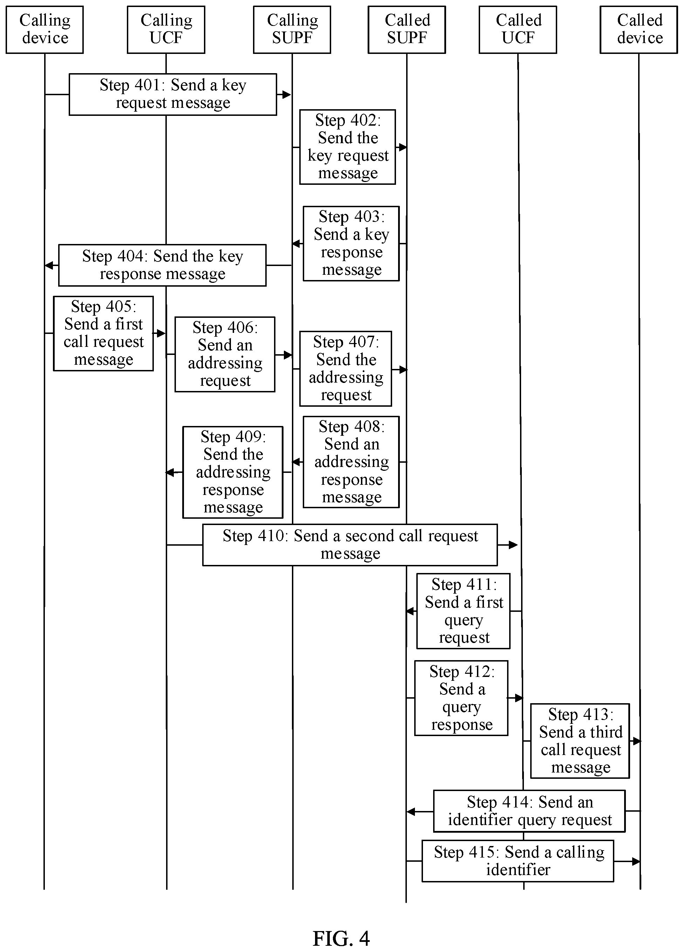

Based on Embodiment 1 or Embodiment 2, the terminal device has obtained the temporary identifier corresponding to the user identifier. With reference to FIG. 4, the following describes the foregoing Phase 2, namely, the process in which the calling user calls the called user by using the calling temporary identifier and the called temporary identifier.

In this embodiment, an example in which a calling user "zhangsan" located in Guangdong calls a called user "lisi" located in Beijing is used for description. In this example, a calling SUPF to which the calling user belongs is an SUPF located in Guangdong, and a called SUPF to which the called user belongs is an SUPF located in Beijing.

Step 401: A calling device sends a key request message to a calling SUPF.

A function performed by the calling SUPF in this embodiment may also be performed by any other device. This is not specifically limited in this embodiment.

In this embodiment, in a process in which a calling user calls a called user, if an anti-snooping function is expected to be enabled to ensure that neither a calling identifier of the calling user nor a called identifier of the called user is leaked, the calling device sends the key request message to the calling SUPF to which the calling device belongs.

The key request message in this embodiment further includes route information. The route information indicates an IP address of a called SUPF to which the called user belongs.

Step 402: The calling SUPF sends the key request message to the called SUPF.

A function performed by the called SUPF in this embodiment may also be performed by any other device. This is not specifically limited in this embodiment. The called SUPF described in this embodiment may also be referred to as a first device, and a specific name is not limited.

The calling SUPF sends the key request message to the called SUPF based on the route information included in the key request message.

Step 403: The called SUPF sends a key response message to the calling SUPF.

The called SUPF obtains a public key of the called SUPF based on the key request message, and sends the key response message including the public key to the calling SUPF.

The called SUPF generates a public key and a private key based on an elliptic curve cryptography (elliptic curve cryptography, ECC) algorithm, retains the private key, and sends the public key to the calling device by using the key response message.

Step 404: The calling SUPF sends the key response message to the calling device.

Step 405: The calling device sends a first call request message to a calling UCF.

A function performed by the calling UCF in this embodiment may also be performed by any other device. This is not specifically limited in this embodiment.

The first call request message includes a first encrypted calling identifier and a first encrypted called identifier. The first encrypted calling identifier is generated by encrypting the calling identifier by using a first key, and the first encrypted called identifier is generated by encrypting the called identifier by using the first key.

The following describes a process in which the calling device obtains the first key.

The calling device generates a temporary public key and a temporary private key based on the ECC algorithm. In this embodiment, the public key and the private key generated by the called SUPF based on the ECC algorithm are A1 and A2, and the temporary public key and the temporary private key generated by the calling device based on the ECC algorithm are B1 and B2.

The calling device generates the first key by using the temporary private key B2 and the public key A1 from the called SUPF.

The A1, A2, B1, and B2 described in this embodiment meet the following condition:

$$A1*B2=A2*B1.$$

When the condition A1*B2=A2*B1 is met, it can be ensured that the first key generated by the calling device is the same as a first key generated by the called SUPF.

When obtaining the first key, the calling device may encrypt the calling identifier to generate the first encrypted calling identifier, and may further encrypt the called identifier by using the first key to generate the first encrypted called identifier.

For example, a first encrypted calling identifier "t5BmaxujRLyPsQrsMBf6T5ALJdUSIfzTH1ecIzffiderzs@gd.ct.com" is generated after the calling device encrypts a calling identifier "zhangsan@gd.ct.com" by using the first key. For another example, a first encrypted called identifier "GNADCBiQKBgQCCSqGSIb3DQEBAQUAA4jfidedls@bj.cmcc.com" is generated after the calling device encrypts a called identifier "lisi@bj.cmcc.com" by using the first key.

It can be noted that, specific content of the first encrypted called identifier and the first encrypted calling identifier is not limited in this embodiment, provided that leakage of the first encrypted calling identifier and the first encrypted called identifier does not cause leakage of the calling identifier of the calling user and the called identifier of the called user, and security of privacy information of the calling user and privacy information of the called user is ensured.

The first call request message described in this embodiment further includes the calling temporary identifier of the calling user. For specific descriptions of the calling temporary identifier, refer to the descriptions of the temporary identifier shown in Embodiment 1 or Embodiment 2. Details are not described in this embodiment.

To ensure that the called SUPF can generate the first key same as the first key of the calling device, the first call request message in this embodiment further includes the temporary public key generated by the calling device.

The description of the first key in this embodiment is an optional example, and the first key may also be a symmetric-key encryption key, to ensure that the first key stored in the calling device is the same as the first key stored in the called SUPF.

To better understand the first call request message described in this embodiment, the following provides an example to describe specific content of the first call request message.

The following uses an example in which the first call request message is a session initiation protocol (session initiation protocol, SIP) message. The following shows a header of the SIP message:

(1) INVITE GNADCBiQKBgQCCSqGSIb3DQEBAQUAA4jfidedls@bj.cmcc.com SIP/2.0
(2) Route: <sip:icscf105.domain1027.huawei.com;lr;orig>
(3) Call-ID: 4b4f2093dc66b0907d8a8ebf96abcc6e
(4) From:<t5BmaxujRLyPsQrsMBf6T5ALJdUSIfzTH1eclzffiderzs@gd.ct.com>;
(5) To: < GNADCBiQKBgQCCSqGSIb3DQEBAQUAA4jfidedls@bj.cmcc.com>
(6) FID-reg: f6T5ALJdUSIfzTH1 eclzft5BmaxujRLyPsQrsMBfidregzs@gd.ct.com
(7) pub_key_UE: OZwNeXIbkaa2RQ212vYRawuq+o7UOjDzrK

Line (1) indicates an object to which the first call request message is to be sent. The object to which the first call request message is to be sent is the first encrypted called identifier of the called user, and the first encrypted called identifier may be: GNADCBiQKBgQCCSqGSIb3DQEBAQUAA4jfidedls@bj.cmcc.com.

SIP/2.0 indicates that a version specified in the first call request message is an SIP version 2.0.

Line (2) indicates the route information, where the route information is the IP address of the called SUPF.

Line (3): The Call-ID is a call identifier, and is a unique identifier for distinguishing a group of messages in a series of messages. Specifically, for a same call (namely, the calling user calling the called user in this embodiment), no matter how many devices forward the first call request message for how many times, all interaction information includes the call identifier Call-ID. The Call-ID is generated by the calling device, and global uniqueness of the Call-ID is ensured in a communication system.

Line (4): The From includes the first encrypted calling identifier of the calling user, namely, t5BmaxujRLyPsQrsMBf6T5ALJdUSIfzTH1eclzffiderzs@gd.ct.com.

Line (5): The TO includes the first encrypted called identifier of the called user, namely, GNADCBiQKBgQCCSqGSIb3DQEBAQUAA4jfidedls@bj.cmcc.com.

Line (6): The FID-reg includes the calling temporary identifier of the calling user, namely, f6T5ALJdUSIfzTH1eclzft5BmaxujRLyPsQrsMBfidregzs@gd.ct.com.

Line (7): The pub_key_UE includes the temporary public key generated by the calling device.

It can be noted that, the description of a format of the first call request message in this embodiment is an optional example, and is not limited, provided that the first call request message in this embodiment includes the first encrypted calling identifier, the first encrypted called identifier, the calling temporary identifier, and the temporary public key.

In this embodiment, an example in which the first call request message is a message that meets the SIP is used for description. In another example, the first call request message may further meet another protocol. This is not specifically limited in this embodiment.

Step 406: The calling UCF sends an addressing request to the calling SUPF.

To implement the call from the calling user to the called user, the calling UCF needs to obtain an IP address of a called UCF to which the called user belongs. The addressing request described in this embodiment is used to request to obtain an address of the called UCF.

In this embodiment, an example in which the address of the called UCF is the IP address of the called UCF is used for description. In another example, the address of the called UCF may also be a domain name address or any other type of address. This is not specifically limited in this embodiment.

The addressing request includes the first encrypted calling identifier, the first encrypted called identifier, and the temporary public key.

Step 407: The calling SUPF sends the addressing request to the called SUPF.

Step 408: The called SUPF sends an addressing response message to the calling SUPF.

In this embodiment, when receiving the first encrypted called identifier included in the addressing request, the called SUPF may decrypt the first encrypted called identifier by using the first key, to obtain the called identifier of the called user.

The called SUPF queries for the IP address of the called UCF corresponding to the called identifier, and sends the addressing response message including the IP address of the called UCF to the calling SUPF.

The following describes a process in which the called SUPF obtains the first key.

In this embodiment, the called SUPF generates the first key based on the private key stored in the called SUPF and the temporary public key from the calling device. For a process of generating the first key by the SUPF in this embodiment, refer to the foregoing process of generating the first key by the calling device. Details are not described again, provided that the first key generated by the calling device in this embodiment is the same as the first key generated by the called SUPF.

Based on the same first key, the called SUPF can decrypt the first encrypted called identifier to obtain the called identifier, and can further decrypt the first encrypted calling identifier to obtain the calling identifier.

To facilitate the call to the called user, the called SUPF may establish a first query list shown in Table 3. For details, refer to Table 3.

**Table 3**

| Call identifier | Calling user | First encrypted calling identifier |
|---|---|---|
| | | Calling identifier |
| | Called user | First encrypted called identifier |
| | | Called identifier |
| | | Called temporary identifier |
| | Key | Temporary public key |
| | | First key |

Specifically, for specific descriptions of the call identifier, refer to step 405. Details are not described in this embodiment.

For the calling user, the called SUPF establishes a correspondence between the call identifier and the first encrypted calling identifier. The called SUPF decrypts the first encrypted calling identifier by using the first key to obtain the calling identifier, and may establish a correspondence between the calling identifier and the call identifier.

For the called user, the called SUPF establishes a correspondence between the call identifier and the first encrypted called identifier. The called SUPF decrypts the first encrypted called identifier by using the first key to obtain the called identifier, and may establish a correspondence between the called identifier and the call identifier.

Based on Embodiment 1 or Embodiment 2, the called device used by the called user can obtain the called temporary identifier allocated by the called SUPF, and in a registration phase, the called SUPF has established a correspondence between the called identifier and the called temporary identifier, as shown in Table 1. It can be learned that when obtaining the called identifier, the called device may obtain the corresponding called temporary identifier by querying for the correspondence shown in Table 1, and the called SUPF may establish a correspondence between the call identifier and the called temporary identifier.

It can be learned that the addressing response message in this embodiment includes the IP address of the called UCF, the first encrypted called identifier, and the first encrypted calling identifier.

Step 409: The calling SUPF sends the addressing response message to the calling UCF.

After receiving the addressing response message, the calling UCF may obtain the IP address of the called UCF.

Optionally, the calling UCF may further send a service request to a calling SEF, to trigger an SEF to execute a corresponding calling service. The calling service may be a call barring service, a supplementary service, and the like of the calling user. This is not specifically limited in this embodiment.

In a process of triggering the calling service, the calling SEF needs to obtain a profile for implementing the calling service. Therefore, the calling SEF sends a service request message to the calling SUPF. The service request message includes the calling temporary identifier. The calling SUPF queries for the calling identifier corresponding to the calling temporary identifier. For details, refer to Table 1. Details are not described again.

The calling SUPF obtains a profile of a calling service corresponding to the calling identifier, and sends a service response including the profile to the calling SEF. The calling SEF may implement the calling service based on the profile.

It can be learned that, in a process of obtaining the profile of the calling service from the calling SUPF, the calling SEF sends the calling temporary identifier to the calling SUPF. It can be learned that, the calling SEF does not obtain an identifier of the calling user, so that a possibility of leakage of the identifier of the calling user at the calling SEF is avoided. In this way, even if the calling SEF is in an insecure state, leakage of the calling identifier does not occur, and security of privacy information of the calling user is improved.

In this embodiment, step 401 to step 409 are performed in the process in which the calling user calls the called user. In another example, before the calling user calls the called user, step 401 to step 409 described in this embodiment may also be performed in advance.

Step 410: The calling UCF sends a second call request message to the called UCF.

A function performed by the called UCF in this embodiment may also be performed by any other device. This is not specifically limited in this embodiment. The called UCF described in this embodiment may also be referred to as a second device, and a specific name is not limited.

To implement the call from the calling user to the called user, the calling UCF sends the second call request message to the called UCF based on the IP address of the called UCF.

Specifically, the calling UCF constructs the second call request message based on the first call request message from the calling device. The second call request message in this embodiment includes the first encrypted calling identifier and the first encrypted called identifier.

It can be learned that, a difference between the first call request message and the second call request message in this embodiment lies in that although the first call request message and the second call request message both include the first encrypted calling identifier and the first encrypted called identifier, the second call request does not include the calling temporary identifier and the temporary public key that are included in the first call request message.

Step 411: The called UCF sends a first query request to the called SUPF.

In this embodiment, if the called UCF determines that the called identifier included in the received second call request message is an encrypted identifier, the called UCF sends the first query request to the called SUPF. The first query request includes the first encrypted called identifier.

The first query request is used to request to obtain a called temporary identifier corresponding to the first encrypted called identifier.

Step 412: The called SUPF sends a query response to the called UCF.

It can be learned from step 408 that the called SUPF has created the first query list shown in Table 3. It can be learned that a correspondence between the called temporary identifier and the first encrypted called identifier has been created in the first query list. For specific descriptions of the first query list, refer to step 408. Details are not described again.

When receiving the first query request including the first encrypted called identifier, the called SUPF may determine the called temporary identifier corresponding to the first encrypted called identifier based on the first query list.

The called SUPF sends the query response including the called temporary identifier to the called UCF.

Step 413: The called UCF sends a third call request message to the called device.

It can be learned from step 203 shown in Embodiment 1 that, in the registration phase of the called device, the called UCF has created the registration address query list shown in Table 2. For specific descriptions of the registration address query list, refer to step 203. Details are not described in this embodiment.

It can be learned that, when receiving the called temporary identifier included in the query response, the called UCF may determine a registration address corresponding to the called temporary identifier by querying for the registration address query list shown in Table 2. The called UCF may send the third call request message to the registration address.

For example, if the called temporary identifier of the called user "lisi" is "CSqGSIb3DQEBAQUAA4GNADCBiQKBgQCjfidregls@bj.cmcc.com", and the called UCF determines, by using Table 2, that the registration address corresponding to the called temporary identifier is an IP address 1, the called UCF may send the third call request message to the IP address 1.

The third call request message in this embodiment includes the called temporary identifier.

When the called device receives the third call request from the called UCF, a connection to the called device may be implemented. The following uses an example to describe how to implement the called device to display the identifier of the calling user in the process in which the calling user calls the called user.

In this embodiment, that the following step 414 and step 415 need to be performed to implement display of the calling identifier by the called device is used as an example. It can be noted that, step 414 and step 415 described in this embodiment are optional steps. In another example, the called device may not need to display the calling identifier.

Step 414: The called device sends an identifier query request to the called SUPF.

To support a function of the called device of querying for the calling identifier of the calling user, the third call request message sent by the called UCF to the called device further includes the first encrypted calling identifier.

To display the calling identifier of the calling user, the called device sends the identifier query request to the called SUPF. The identifier query request includes the first encrypted calling identifier.

Step 415: The called SUPF sends the calling identifier to the called device.

When obtaining the first encrypted calling identifier included in the first query request, the called SUPF may query, based on the first query list shown in Table 3, for the calling identifier corresponding to the first encrypted calling identifier.

It can be noted that, in this embodiment, that the called device sends the first encrypted calling identifier to the called SUPF to request to obtain the calling identifier is used as an example. In another example, alternatively, the called device may directly send the called temporary identifier to the called SUPF. A query stored by the called SUPF is shown in Table 3. The called temporary identifier and the calling identifier correspond to the call identifier. It can be learned that, the called SUPF can query, by using the called temporary identifier, for the calling identifier corresponding to the called temporary identifier.

When receiving the calling identifier, the called device may display the calling identifier in a ringing process.

In this embodiment, a secure connection may be established between the called SUPF and the called device, and the called SUPF may send the calling identifier to the called device based on the secure connection. In this way, security of the calling identifier sent by the called SUPF to the called device is effectively improved.

In this embodiment, except that the called SUPF sends the calling identifier to the called device in plaintext, in the process in which the calling user calls the called user, the calling identifier and the called identifier that are related to privacy information are sent in ciphertext. In this way, leakage of the calling identifier and the called identifier is effectively avoided, and security of communication between the calling user and the called user is effectively improved.

In addition, in the method described in this embodiment, the secure connection does not need to be established between the calling device and the calling SUPF, between the calling device and the calling UCF, between the calling UCF and the called UCF, between the called SUPF and the called UCF, or between the called UCF and the called device. In this way, the leakage of the calling identifier and the called identifier may be effectively avoided, complexity of interaction between devices is reduced, and call efficiency is improved.

In this embodiment, in the process in which the calling user calls the called user, an intermediate device such as the calling SUPF, the calling UCF, or the called UCF does not need to decrypt the first encrypted calling identifier or the first encrypted called identifier. In this way, a risk of leakage caused by decrypting the first encrypted calling identifier and the first encrypted called identifier by the intermediate device is avoided, and security of the calling identifier and the called identifier in a call process is improved. In addition, because the intermediate device does not need a process of decryption, the call efficiency is improved.

In this embodiment, both the calling identifier and the called identifier obtained by the calling UCF and the called UCF are encrypted. In this way, a possibility of leakage of the calling identifier and the called identifier at the calling UCF and the called UCF is avoided. Even if the calling UCF and the called UCF are in an insecure state, the calling identifier and the called identifier are not leaked.

**Embodiment 4**

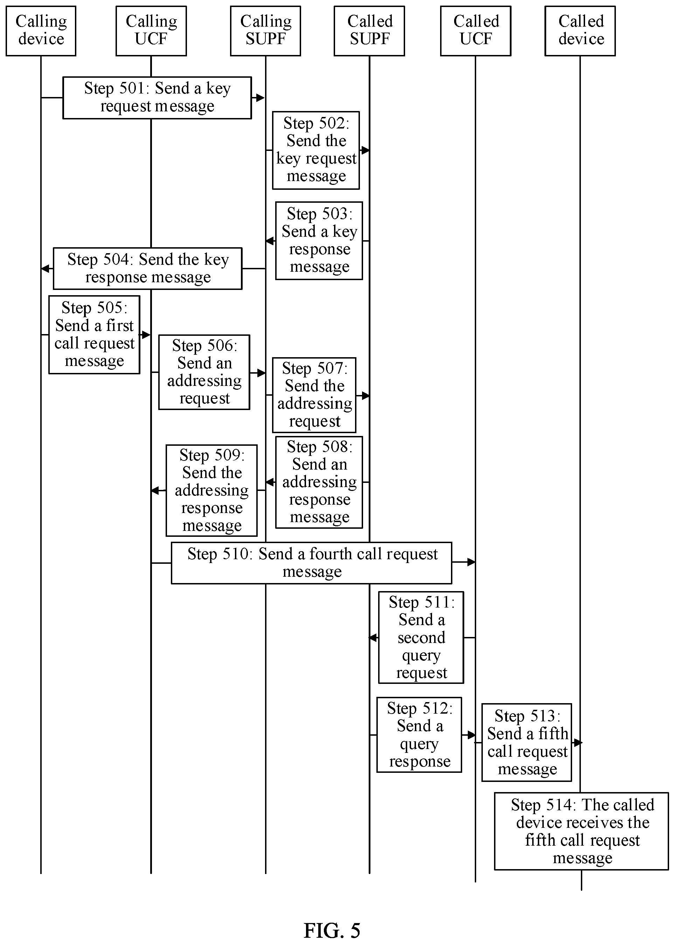

In Embodiment 3, if the called device needs to display the calling identifier, the called device needs to send the identifier query request to the called SUPF separately. However, in this embodiment, the called device may display the calling identifier without sending an identifier query request to a called SUPF separately. A specific implementation process is shown in FIG. 5.

Step 501: A calling device sends a key request message to a calling SUPF.

Step 502: The calling SUPF sends the key request message to a called SUPF.

Step 503: The called SUPF sends a key response message to the calling SUPF.

Step 504: The calling SUPF sends the key response message to the calling device.

Step 505: The calling device sends a first call request message to a calling UCF.

Step 506: The calling UCF sends an addressing request to the calling SUPF.

Step 507: The calling SUPF sends the addressing request to the called SUPF.

For a specific execution process of step 501 to step 507 described in this embodiment, refer to step 401 to step 407 in Embodiment 3. Details of the specific execution process are not described in this embodiment.

Step 508: The called SUPF sends an addressing response message to the calling SUPF.

In this embodiment, when receiving a first encrypted calling identifier and a first encrypted called identifier that are included in the addressing request, the called SUPF decrypts the first encrypted called identifier by using a first key to obtain a called identifier of a called user. The called SUPF can also decrypt the first encrypted calling identifier by using the first key to obtain a calling identifier of a calling user. For a process in which the called SUPF obtains the first key, refer to step 408 in Embodiment 3. Details are not described in this embodiment.

The called SUPF queries for an IP address of a called UCF corresponding to the called identifier, and sends the addressing response message including the IP address of the called UCF to the calling SUPF.

To facilitate a call to the called user, the called SUPF may establish a second query list shown in Table 4. For details, refer to Table 4.

**Table 4**

| Call identifier | Calling user | First encrypted calling identifier |
|---|---|---|
| | | Calling identifier |
| | | Second encrypted calling identifier |
| | Called user | First encrypted called identifier |
| | | Called identifier |
| | | Called temporary identifier |
| | | Second encrypted called identifier |
| | Key | Temporary public key |
| | | First key |
| | | Second key |

For descriptions of specific content included in Table 4, refer to Table 3 in Embodiment 3. Details are not described in this embodiment.

The called SUPF in this embodiment encrypts the called identifier by using the second key to generate the second encrypted called identifier, and further establishes a correspondence between the second encrypted called identifier and the call identifier by using the second query list shown in Table 4.

The second key is the same as a second key stored in the called device. A process in which the called SUPF obtains the second key is not limited in this embodiment. For example, the called SUPF may receive the second key from the called device. The second key described in this embodiment may be a symmetric-key encryption key. For specific descriptions of the symmetric-key encryption key, refer to Embodiment 1. Details are not described in this embodiment.

The called SUPF in this embodiment encrypts the calling identifier by using the second key to generate the second encrypted calling identifier, and further establishes the correspondence between the second encrypted called identifier and the call identifier by using the second query list shown in Table 4.

The addressing response message in this embodiment includes the IP address of the called UCF, the second encrypted called identifier, and the second encrypted calling identifier.

Step 509: The calling SUPF sends the addressing response message to the calling UCF.

For an execution process of step 509 described in this embodiment, refer to step 409 shown in Embodiment 3. Details are not described in this embodiment.

Step 510: The calling UCF sends a fourth call request message to the called UCF.

To implement a call from the calling user to the called user, the calling UCF sends the fourth call request message to the called UCF based on the IP address of the called UCF.

Specifically, the fourth call request message described in this embodiment includes the second encrypted calling identifier and the second encrypted called identifier.

Step 511: The called UCF sends a second query request to the called SUPF.

In this embodiment, if the called UCF determines that the called identifier included in the received fourth call request message is an encrypted identifier, the called UCF sends the second query request to the called SUPF. The second query request includes the second encrypted called identifier.

The second query request is used to request to obtain a called temporary identifier corresponding to the second encrypted called identifier.

Step 512: The called SUPF sends a query response to the called UCF.

It can be learned from step 508 that the called SUPF has created the second query list shown in Table 4. It can be learned that a correspondence between the called temporary identifier and the second encrypted called identifier has been created in the second query list. For specific descriptions of the second query list, refer to step 508. Details are not described again.

When receiving the second query request including the second encrypted called identifier, the called SUPF may determine the called temporary identifier corresponding to the second encrypted called identifier based on the second query list.

The called SUPF sends the query response including the second encrypted called identifier to the called UCF.

Step 513: The called UCF sends a fifth call request message to the called device.

It can be learned from step 203 shown in Embodiment 1 that, in a registration phase of the called device, the called UCF has created the registration address query list shown in Table 2. For specific descriptions of the registration address query list, refer to step 203. Details are not described in this embodiment.

It can be learned that, when receiving the called temporary identifier included in the query response, the called UCF may determine a registration address corresponding to the called temporary identifier by querying for the registration address query list shown in Table 2. The called UCF may send the fifth call request message to the registration address.

The third call request message in this embodiment includes the called temporary identifier and the second encrypted calling identifier.

Step 514: The called device receives the fifth call request message.

When the called device receives the fifth call request from the called UCF, a connection to the called device may be implemented.

It can be learned from the foregoing descriptions that, in this embodiment, the second key stored in the called SUPF is the same as the second key stored in the called device. Therefore, it can be learned that when receiving the second encrypted calling identifier, the called device may decrypt the second encrypted calling identifier by using the second key to obtain the calling identifier.

After successfully obtaining the decrypted calling identifier, the called device may display the calling identifier.

For descriptions of advantageous effects of the call processing method described in this embodiment, refer to Embodiment 3. Details are not described again.

A further advantageous effect of this embodiment is as follows: The called device in this embodiment may obtain the calling identifier based on the fifth call request message without sending the identifier query request to the called SUPF separately. In this way, call efficiency is improved.

In addition, the calling identifier sent by the called SUPF to the called device in this embodiment is also encrypted. In this way, security of the calling identifier is improved, and a possibility of leakage that occurs when the called SUPF sends the calling identifier to the called device is avoided.

**Embodiment 5**

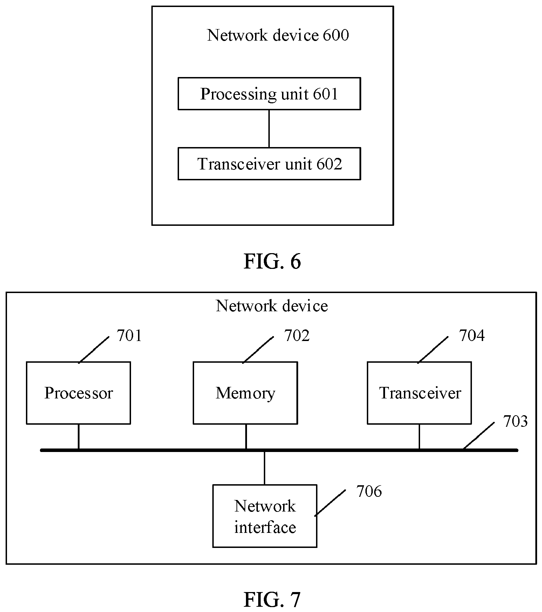

This embodiment describes a structure of a network device that performs the foregoing call processing method with reference to FIG. 6.

A network device 600 specifically includes a processing unit 601 and a transceiver unit 602. The processing unit 601 is connected to the transceiver unit 602.

If the network device 600 described in this embodiment is a UCF, the processing unit 601 is configured to perform a processing function performed by the UCF in Embodiment 1 or Embodiment 2. The transceiver unit 602 is configured to perform a transceiver function performed by the UCF in Embodiment 1 or Embodiment 2.

If the network device 600 described in this embodiment is a UCF, and the UCF is a calling UCF, the processing unit 601 is configured to perform a processing function performed by the calling UCF in any one of Embodiment 3 to Embodiment 5. The transceiver unit 602 is configured to perform a transceiver function performed by the calling UCF in any one of Embodiment 3 to Embodiment 5.

If the network device 600 described in this embodiment is a UCF, and the UCF is a called UCF, the processing unit 601 is configured to perform a processing function performed by the called UCF in any one of Embodiment 3 to Embodiment 5. The transceiver unit 602 is configured to perform a transceiver function performed by the called UCF in any one of Embodiment 3 to Embodiment 5.

If the network device 600 described in this embodiment is a SUPF, the processing unit 601 is configured to perform a processing function performed by the SUPF in Embodiment 1 or Embodiment 2. The transceiver unit 602 is configured to perform a transceiver function performed by the SUPF in Embodiment 1 or Embodiment 2.

If the network device 600 described in this embodiment is an SUPF, and the SUPF is a calling SUPF, the processing unit 601 is configured to perform a processing function performed by the calling SUPF in any one of Embodiment 3 to Embodiment 5. The transceiver unit 602 is configured to perform a transceiver function performed by the calling SUPF in any one of Embodiment 3 to Embodiment 5.

If the network device 600 described in this embodiment is an SUPF, and the SUPF is a called SUPF, the processing unit 601 is configured to perform a processing function performed by the called SUPF in any one of Embodiment 3 to Embodiment 5. The transceiver unit 602 is configured to perform a transceiver function performed by the called SUPF in any one of Embodiment 3 to Embodiment 5.

If the network device 600 described in this embodiment is a terminal device, the processing unit 601 is configured to perform a processing function performed by the terminal device in Embodiment 1 or Embodiment 2. The transceiver unit 602 is configured to perform a transceiver function performed by the terminal device in Embodiment 1 or Embodiment 2.

If the network device 600 described in this embodiment is a calling device, the processing unit 601 is configured to perform a processing function performed by the calling device in any one of Embodiment 3 to Embodiment 5. The transceiver unit 602 is configured to perform a transceiver function performed by the calling device in any one of Embodiment 3 to Embodiment 5.

If the network device 600 described in this embodiment is a called device, the processing unit 601 is configured to perform a processing function performed by the called device in any one of Embodiment 3 to Embodiment 5. The transceiver unit 602 is configured to perform a transceiver function performed by the called device in any one of Embodiment 3 to Embodiment 5.

**Embodiment 6**

With reference to FIG. 7, this embodiment describes, from a perspective of physical hardware, a structure of a network device that performs the foregoing call processing method.

The network device specifically includes a processor 701, a memory 702, a bus 703, a transceiver 704, and a network interface 706.

Specifically, the memory 702 may include a computer storage medium in a form of a volatile memory and/or a non-volatile memory, for example, a read-only memory and/or a random access memory. The memory 702 may store an operating system, an application program, another program module, executable code, and program data.

The transceiver 704 may be configured to input a command and information to the network device, and may be connected to the processor 701 by using the bus 703. The transceiver 704 may be further configured to output information to the network device, for example, a selected placeholder server and/or a selected placeholder virtual machine.

The network device may be connected to a communication network by using the network interface 706. In a network connection environment, computer-executable instructions stored in the network device may be stored in a remote storage device, but is not limited to local storage.

When the processor 701 in the network device executes the executable code or the application program stored in the memory 702, the network device may perform a method operation on any side in the foregoing method embodiment. For a specific execution process, refer to the foregoing method embodiment. Details are not described herein again.

The foregoing embodiments are merely intended for describing the technical solutions of the present invention, but not for limiting the present invention. Although the present invention is described in detail with reference to the foregoing embodiments, persons of ordinary skill in the art can understand that they may still make modifications to the technical solutions described in the foregoing embodiments or make equivalent replacements to some technical features thereof, without departing from the scope of the technical solutions of embodiments of the present invention.

**Claims**

1. A call processing method, wherein the method comprises:

   receiving, by a first device, an encrypted called identifier, wherein the encrypted called identifier is generated by encrypting a called identifier, and the called identifier is an identifier of a called user;
   obtaining, by the first device, a called temporary identifier corresponding to the encrypted called identifier, wherein the called temporary identifier is an identifier temporarily allocated to the called user; and
   sending, by the first device, the called temporary identifier to a second device, wherein the second device is configured to call, based on the called temporary identifier, a called device used by the called user.

2. The method according to claim 1, wherein before the obtaining, by the first device, a called temporary identifier corresponding to the encrypted called identifier, the method further comprises:

   obtaining, by the first device, the called temporary identifier corresponding to the called identifier; and
   establishing, by the first device, a correspondence between the encrypted called identifier and the called temporary identifier.

3. The method according to claim 2, wherein before the obtaining, by the first device, the called temporary identifier corresponding to the called identifier, the method further comprises:

   receiving, by the first device, the encrypted called identifier from a calling device, wherein the encrypted called identifier is generated by encrypting the called identifier by using a first key, and the calling device is a device used by a calling user; and
   decrypting, by the first device, the encrypted called identifier by using the first key to obtain the called identifier.

**4.** The method according to claim 3, wherein before the decrypting, by the first device, the encrypted called identifier by using the first key to obtain the called identifier, the method further comprises:
calculating, by the first device, a private key and a temporary public key from the calling device by using an elliptic curve cryptography (ECC) algorithm, to obtain the first key.

**5.** The method according to claim 3 or 4, wherein before the sending, by the first device, the called temporary identifier to a second device, the method further comprises:

receiving, by the first device, a first encrypted calling identifier from the calling device, wherein the first encrypted calling identifier is generated by encrypting a calling identifier by using the first key, and the calling identifier is an identifier of the calling user;
decrypting, by the first device, the first encrypted calling identifier by using the first key to obtain the calling identifier; and
establishing, by the first device, a correspondence between the encrypted called identifier and the calling identifier.

**6.** The method according to claim 5, wherein after the sending, by the first device, the called temporary identifier to a second device, the method further comprises:

receiving, by the first device, an identifier query request from the called device, wherein the identifier query request comprises the first encrypted calling identifier;
obtaining, by the first device, the calling identifier corresponding to the encrypted calling identifier; and
sending, by the first device, the calling identifier to the called device.

**7.** The method according to claim 2, wherein before the obtaining, by the first device, the called temporary identifier corresponding to the called identifier, the method further comprises:

encrypting, by the first device, the called identifier by using a second key to generate the encrypted called identifier; and
sending, by the first device, the encrypted called identifier to a calling device.

**8.** The method according to claim 7, wherein before the sending, by the first device, the called temporary identifier to a second device, the method further comprises:

receiving, by the first device, a first encrypted calling identifier from the calling device, wherein the first encrypted calling identifier is generated by encrypting a calling identifier by using a first key, and the calling identifier is an identifier of a calling user;
decrypting, by the first device, the first encrypted calling identifier by using the first key to obtain the calling identifier;
encrypting, by the first device, the calling identifier by using the second key to generate a second encrypted calling identifier; and
sending, by the first device, the second encrypted calling identifier to the called device.

**9.** The method according to any one of claims 1 to 8, wherein before the receiving, by a first device, an encrypted called identifier, the method further comprises:

receiving, by the first device, a first temporary identifier application from the called device, wherein the first temporary identifier application comprises an identifier of a subscriber identity module card of the called device;
allocating, by the first device, the called temporary identifier to the called user based on the first temporary identifier application;
establishing, by the first device, a correspondence between the called identifier and the called temporary identifier; and
sending, by the first device, the called temporary identifier and the encrypted called identifier to the called device.

**10.** The method according to any one of claims 1 to 8, wherein before the receiving, by a first device, an encrypted called identifier, the method further comprises:

receiving, by the first device, a second temporary identifier application from the called device, wherein the second temporary identifier application comprises the called identifier;

allocating, by the first device, the called temporary identifier to the called user based on the second temporary identifier application;

establishing, by the first device, a correspondence between the called identifier and the called temporary identifier; and

sending, by the first device, the called temporary identifier to the called device.

11. The method according to any one of claims 1 to 10, wherein after the sending, by the first device, the called temporary identifier to the called device, the method further comprises:

receiving, by the first device, a registration request from the called device, wherein the registration request comprises the called temporary identifier;

sending, by the first device, a random number to the called device;

encrypting, by the first device, the random number by using a third key to generate a first parameter;

receiving, by the first device, a second parameter from the called device, wherein the second parameter is a parameter generated by the called device by encrypting the random number by using the third key; and

if the first device determines that the first parameter is equal to the second parameter, sending, by the first device, a registration response message to the called device, wherein the registration response message indicates that the called device registers successfully.

12. A call processing method, wherein the method comprises:

obtaining, by a calling device, a called identifier corresponding to a to-be-called called user;

encrypting, by the calling device, the called identifier to obtain an encrypted called identifier; and

sending, by the calling device, a call request message to a second device, wherein the call request message comprises the encrypted called identifier.

13. The method according to claim 12, wherein the encrypting, by the calling device, the called identifier to obtain an encrypted called identifier comprises:

encrypting, by the calling device, the called identifier by using a first key to obtain the encrypted called identifier.

14. The method according to claim 12, wherein before the sending, by the calling device, a call request message to a second device, the method further comprises:

encrypting, by the calling device, a calling identifier by using a first key to obtain an encrypted calling identifier, wherein the calling identifier is an identifier of a calling user, and the call request message comprises the encrypted calling identifier.

15. The method according to claim 13 or 14, wherein the method further comprises:

calculating, by the calling device, a temporary private key and a public key from a first device by using an elliptic curve cryptography (ECC) algorithm, to obtain the first key.

16. A call processing method, wherein the method comprises:

receiving, by a second device, a called temporary identifier from a first device, wherein the called temporary identifier is an identifier temporarily allocated to a called user; and

sending, by the second device, a call request message to a called device, wherein the call request message comprises the called temporary identifier, and the called device is a device used by the called user.

17. The method according to claim 16, wherein before the receiving, by a second device, a called temporary identifier from a first device, the method further comprises:

receiving, by the second device, a call request message from a calling device, wherein the call request message comprises an encrypted called identifier, the encrypted called identifier is generated by encrypting a called identifier, and the called identifier is an identifier of the called user; and

sending, by the second device, a query request to the first device, wherein the query request comprises the encrypted called identifier, and is used to request to obtain a called temporary identifier corresponding to the encrypted called identifier.

18. The method according to claim 17, wherein the sending, by the second device, a call request message to a called device comprises:
sending, by the second device, the call request message to the called device based on a registration address of a called device corresponding to the called temporary identifier.

19. A first device, comprising a memory and a transceiver both coupled to a processor, wherein the memory stores computer program code, and the processor invokes and executes the computer program code in the memory, to enable the processor to perform a processing-related step in the method according to any one of claims 1 to 11, and enable the transceiver to be configured to perform a receiving/sending-related step in the method according to any one of claims 1 to 11.

20. A calling device, comprising a memory and a transceiver both coupled to a processor, wherein the memory stores computer program code, and the processor invokes and executes the computer program code in the memory, to enable the processor to perform a processing-related step in the method according to any one of claims 12 to 15, and enable the transceiver to be configured to perform a receiving/sending-related step in the method according to any one of claims 12 to 15.

21. A second device, comprising a memory and a transceiver both coupled to a processor, wherein the memory stores computer program code, and the processor invokes and executes the computer program code in the memory, to enable the processor to perform a processing-related step in the method according to any one of claims 16 to 18, and enable the transceiver to be configured to perform a receiving/sending-related step in the method according to any one of claims 16 to 18.

22. A communication system, comprising a calling device, a first device, a second device, and a called device, wherein the calling device is configured to call the called device via the first device and the second device, the calling device is as described according to claim 20, the first device is as described according to claim 19, and the second device is as described according to claim 21.

23. A computer-readable storage medium, wherein
the computer-readable storage medium stores a computer program; and when the computer program is executed by a processor, the method according to any one of claims 1 to 18 is implemented.

—100

| Calling BSF 115 | | Calling SUPF 113 | HTTPS | Called SUPF 123 | | Called BSF 215 |

Calling SAF 114

N71

Called SAF 124

N71

Calling SEF 112

N70

Called SEF 122

N70

SIP

SIP

HTTPS

Calling UCF 111

SIP

Called UCF 121

HTTPS

TCF 130

SIP

SIP

Calling device 110

Called device 120

FIG. 1

Terminal device | UCF | SUPF

Step 201: Send a first temporary identifier application

Step 202: Send a temporary identifier

Step 203: Send a registration request

Step 204: Send the registration request

Step 205: Send a response message

Step 206: Send the response message

Step 207: Send a re-registration message

Step 208: Send the re-registration message

Step 209: Determine whether a first parameter is equal to a second parameter, where if the first parameter is equal to the second parameter, step 210 is performed; or if the first parameter is not equal to the second parameter, step 212 is performed

No

Yes

Step 210: Send a registration success response message

Step 211: Send the registration success response message

Step 212: Send a registration failure response message

Step 213: Send the registration failure response message

FIG. 2

| Terminal device | | UCF | | SUPF |
|---|---|---|---|---|

Step 301: Send a second temporary identifier application →

← Step 302: Send a temporary identifier

Step 303: Send a registration request →

Step 304: Send the registration request →

← Step 305: Send a response message

← Step 306: Send the response message

Step 307: Send a re-registration message →

Step 308: Send the re-registration message →

Step 309: Determine whether a first parameter is equal to a second parameter, where if the first parameter is equal to the second parameter, step 310 is performed; or if the first parameter is not equal to the second parameter, step 312 is performed

No

Yes

← Step 310: Send a registration success response message

← Step 311: Send the registration success response message

← Step 312: Send a registration failure response message

← Step 313: Send the registration failure response message

**FIG. 3**

| Calling device | Calling UCF | Calling SUPF | Called SUPF | Called UCF | Called device |
|---|---|---|---|---|---|

Step 401: Send a key request message

Step 402: Send the key request message

Step 403: Send a key response message

Step 404: Send the key response message

Step 405: Send a first call request message

Step 406: Send an addressing request

Step 407: Send the addressing request

Step 409: Send the addressing response message

Step 408: Send an addressing response message

Step 410: Send a second call request message

Step 411: Send a first query request

Step 412: Send a query response

Step 413: Send a third call request message

Step 414: Send an identifier query request

Step 415: Send a calling identifier

FIG. 4

| Calling device | Calling UCF | Calling SUPF | Called SUPF | Called UCF | Called device |
|---|---|---|---|---|---|

Step 501: Send a key request message

Step 502: Send the key request message

Step 503: Send a key response message

Step 504: Send the key response message

Step 505: Send a first call request message

Step 506: Send an addressing request

Step 507: Send the addressing request

Step 509: Send the addressing response message

Step 508: Send an addressing response message

Step 510: Send a fourth call request message

Step 511: Send a second query request

Step 512: Send a query response

Step 513: Send a fifth call request message

Step 514: The called device receives the fifth call request message

**FIG. 5**

Network device 600

Processing unit 601

Transceiver unit 602

**FIG. 6**

Network device

701

Processor

702

Memory

704

Transceiver

703

706

Network interface

**FIG. 7**

## INTERNATIONAL SEARCH REPORT

| | International application No. |
|---|---|
| | **PCT/CN2021/080939** |

**A. CLASSIFICATION OF SUBJECT MATTER**

H04L 29/06(2006.01)i;  H04M 1/725(2021.01)i

According to International Patent Classification (IPC) or to both national classification and IPC

**B. FIELDS SEARCHED**

Minimum documentation searched (classification system followed by classification symbols)

H04L; H04M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 呼叫, 设备, 加密, 标识, 临时, 发送, call, device, identification, temporary, send, TMSI, IMSI, SUPI

**C. DOCUMENTS CONSIDERED TO BE RELEVANT**

| Category* | Citation of document, with indication, where appropriate, of the relevant passages | Relevant to claim No. |
|---|---|---|
| X | CN 101606372 A (NOKIA CORP.) 16 December 2009 (2009-12-16)<br>    claims 1-22 | 1-23 |
| A | CN 111314919 A (XIDIAN UNIVERSITY) 19 June 2020 (2020-06-19)<br>    entire document | 1-23 |
| A | CN 109429328 A (HUAWEI TECHNOLOGIES CO., LTD.) 05 March 2019 (2019-03-05)<br>    entire document | 1-23 |
| A | US 9973625 B1 (AMAZON TECHNOLOGIES, INC.) 15 May 2018 (2018-05-15)<br>    entire document | 1-23 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2021** | **15 December 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/080939**

| Patent document cited in search report | | | Publication date (day/month/year) | Patent family member(s) | | | Publication date (day/month/year) |
|---|---|---|---|---|---|---|---|
| CN | 101606372 | A | 16 December 2009 | WO | 2008095918 | A1 | 14 August 2008 |
| | | | | BR | PI0807096 | A2 | 12 August 2014 |
| | | | | EP | 2122983 | A1 | 25 November 2009 |
| | | | | MX | 2009008393 | A | 18 August 2009 |
| | | | | PL | 2122983 | T3 | 30 April 2014 |
| | | | | RU | 2009133260 | A | 20 March 2011 |
| | | | | AP | 2009004967 | A0 | 31 October 2009 |
| | | | | ES | 2445647 | T3 | 04 March 2014 |
| | | | | AU | 2008212898 | A1 | 14 August 2008 |
| | | | | JP | 2010518719 | A | 27 May 2010 |
| | | | | DK | 2122983 | T3 | 10 February 2014 |
| | | | | US | 2010142499 | A1 | 10 June 2010 |
| | | | | IL | 200154 | D0 | 15 April 2010 |
| | | | | CA | 2676997 | A1 | 14 August 2008 |
| | | | | PT | 2122983 | E | 17 February 2014 |
| | | | | KR | 20090116787 | A | 11 November 2009 |
| | | | | IN | 200904680 | P4 | 09 July 2010 |
| CN | 111314919 | A | 19 June 2020 | None | | | |
| CN | 109429328 | A | 05 March 2019 | WO | 2019037604 | A1 | 28 February 2019 |
| US | 9973625 | B1 | 15 May 2018 | None | | | |

Form PCT/ISA/210 (patent family annex) (January 2015)